# EUROPÄISCHE PATENTSCHRIFT

(11) **EP 0 693 675 B1**
(45) Veröffentlichungstag und Bekanntmachung des Hinweises auf die Patenterteilung: **07.01.2004**
(21) Anmeldenummer: 95250161.7
(22) Anmeldetag: 04.07.1995
(51) Int. Cl.: G01F 1/06, G01F 1/08, G01F 1/10, G01F 1/12

(54) **Woltmannzähler**
Woltmann meter
Compteur Woltmann

(30) Priorität: 19.07.1994 DE 4425459
(43) Veröffentlichungstag der Anmeldung: 24.01.1996
(73) Patentinhaber: H. MEINECKE AG, D-30880 Laatzen (DE)
(72) Erfinder: Kuhlemann, Holger Dipl.Ing., D 31157 Sarstedt (DE)
(74) Vertreter: Brümmerstedt, Hans Dietrich, Dipl.-Ing.

(56) Entgegenhaltungen:
- AT-B- 108 886
- DE-A- 2 934 572
- DE-B- 1 623 946
- GB-A- 1 268 781
- GB-A- 1 279 990
- GB-A- 2 235 539

## Beschreibung

Die vorliegende Erfindung betrifft einen Woltmannzähler mit einem zwischen einer stromauf angeordneten Nabe und einer stromab angeordneten Nabe in einem rohrförmigen Element drehbar gelagerten Flügelrad, wobei die Naben jeweils über Rippen in dem rohrförmigen Element gehaltert sind, und zumindest an der stromauf liegenden Nabe Reguliermittel zur Kompensation von aus Fertigungstoleranzen resultierenden Meßfehlern vorgesehen sind.

Serienmäßig gefertigte Woltmannzähler weisen aufgrund von Fertigungstoleranzen geringfügige Meßfehler auf, die durch geeignete Maßnahmen reguliert, d.h. minimiert werden müssen.

Nach dem Stand der Technik ist es bekannt, eine der die stromauf vom Fügelrad angeordnete Nabe halternden Rippen als Regulierflügel auszubilden, die dazu drehbar um eine Radialachse gelagert ist. In seiner Nullstellung liegt dieser Regulierflügel in Strömungsrichtung des zu messenden Fluids. Wird der Regulierflügel in die Strömung gedreht, erfährt diese eine Richtungsänderung. Die so beeinflußte Strömung wird auch von dem Flügelrad aufgenommen, d.h., dessen Drehzahl erhöht oder verringert sich, je nachdem, in welche Richtung der Regulierflügel ausgeschwenkt wird. Mit Hilfe dieser Einflußnahme lassen sich fertigungsbedingte Anzeigeabweichungen ausgleichen.

Bei Rückwärtsströmung kommt der beschriebene Regulierflügel in eine stromab liegende Position, und ist somit für die Drehzahlbeeinflussung des Flügelrades wirkungslos. Um auch bei dieser Strömungsrichtung regulieren zu können, wird in analoger Weise zusätzlich ein zweiter Regulierflügel auf der anderen Seite des Flügelrades eingebaut. Somit können Meßfehler des Woltmannzählers für beide Strömungsrichtungen ausgeglichen werden.

Bei dieser bekannten Vorrichtung ergibt sich bei ausgeschwenktem Regulierflügel neben der gewünschten Richtungsänderung der Strömung eine unerwünschte Unsymmetrie in der Anströmung auf das Flügelrad. Daraus resultieren zusätzliche Kräfte in einer bestimmten Richtung quer zur Strömung auf das Flügelrad und seine Lager, die sich dann in dieser Richtung einseitig und schneller abnutzen. Außerdem ist der Betrag, um den der Woltmannzähler mit dieser Vorrichtung reguliert werden kann, von der Fließgeschwindigkeit des Fluids abhängig. Mit kleiner werdenden Durchflüssen verschlechtert sich nämlich zunehmend der Reguliereffekt, bis dieser ganz verloren geht.

Aufgabe der vorliegenden Erfindung ist es, die oben beschriebenen Nachteile bei der Regulierung fertigungsbedingter Meßfehler von Woltmannzählern zu vermeiden.

Erfindungsgemäß wird das dadurch erreicht, daß unmittelbar hinter der stromauf angeordneten Nabe ein um die Flügelradachse verschwenkbares Regulierteil vorgesehen ist, welches Stege besitzt, die in seiner Nullstellung im Strömungsschatten der die Nabe halternden Rippen liegen und in seiner verschwenkten Stellung gleichmäßig auf den Umfang verteilt in den Strömungsquerschnitt hineinragen.

In der Nullstellung hat das Regulierteil keine Wirkung auf die Drehzahl des Flügelrades; seine Stege bilden gewissermaßen eine Verlängerung der Nabenrippen und die Strömung bleibt unbeeinflußt. Zur Regulierung eines Meßfehlers wird nun das Regulierteil um die Flügelradachse geschwenkt, so daß seine Stege aus der Abdeckung der Rippen der Nabe gelangen, und in die Strömung hineinragen. Dadurch wird die Anströmrichtung der Flügel des Flügelrades beeinflußt. Je nachdem ob das Regulierteil nach der einen oder nach der anderen Seite herausgeschwenkt wird, erhöht bzw. verringert sich die Drehzahl des Flügelrades. In der verschwenkten Stellung des Regulierteils bilden die Rippen und die ihnen zugeordneten Stege strömungstechnisch gesehen weiterhin eine Einheit. Man kann dieses Zusammenwirken von Rippe und Steg mit einem Flugzeugflügel und dem darin angeordneten Höhenleitwerk vergleichen.

An den Stellen der Strömungsbeeinflussung wirken Querkräfte auf das Flügelrad, die sich aber aufgrund der gleichmäßigen Verteilung der Stege auf den Umfang des Strömungsquerschnitts gegenseitig aufheben, so daß sich keine resultierende Querkraft ausbildet, die die Lager schädigt. Im einfachsten Fall reicht es also beispielsweise aus, wenn zwei diametral gegenüberliegende Nabenrippen und diesen zugeordnete Stege des Regulierteils vorgesehen sind. Es liegt aber auf der Hand, daß durch eine größere Anzahl von Rippen und mit diesen zusammenwirkenden Stegen natürlich größere Regulierbeträge erzielt werden können. Dabei ist es nicht unbedingt erforderlich, daß die Anzahl der Rippen mit der Anzahl der Stege übereinstimmt. Es können auch weniger Stege als Rippen vorgesehen werden, wesentlich ist nur, daß die vorhandenen Stege gleichmäßig auf den Umfang verteilt sind, und in der Nullstellung des Regulierteils im Strömungsschatten der zugeordneten Rippen liegen. Dabei ist es nicht erforderlich, daß die Stege unbedingt völlig deckungsgleich mit den Rippen sind. Die Stege können z.B. auch kürzer oder schmaler als die Rippen sein.

Ein weiterer Vorteil ist darin zu sehen, daß im gesamten Durchflußmeßbereich ein gleichmäßiger Reguliereffekt zu verzeichnen ist; es werden also die Nachteile des Standes der Technik bei kleinen Durchflüssen vermieden. Des weiteren können gegenüber den bekannten Reguliervorrichtungen um ein Vielfaches größere Regulierbeträge erreicht werden, d.h., es sind größere Meßfehler kompensierbar.

Für die Regulierung bei Rückwärtsströmung kann an der stromab liegenden Nabe ein bau- und funktionsgleiches Regulierteil vorgesehen sein.

In weiterer Ausgestaltung der Erfindung ist das Regulierteil als Ring ausgebildet, welcher aus einem Nabenkranz, Stegen und einem Außenkranz besteht. Die Einstellung des Regulierringes erfolgt, wie von den eingangs erwähnten Regulierflügeln her bekannt, mittels eines Antriebs, der die Einstellbewegung von außen in den unter Druck stehenden Meßraum überträgt. Die Durchführung des Antriebs durch das Zählergehäuse bzw. den Kopfflansch des Gehäuses ist gegenüber dem Meßraum abgedichtet.

Ein Außenabschnitt des Außenkranzes des Regulierringes ist als Zahnstange ausgeführt, in die eine an dem Antrieb vorgesehene Schnecke eingreift. Um dieses Zusammenwirken von Zahnstange und Schnecke zu ermöglichen, ist die Wandung des rohrförmigen Elementes an dieser Stelle durchbrochen.

In weiterer Ausbildung der Erfindung besteht der Antrieb aus zwei teleskopartig ineinandergeschobenen Abschnitten, wobei eine Verdrehbewegung von dem einen Abschnitt auf den anderen übertragen werden kann, ohne daß die mögliche teleskopartige Längsbewegung der Abschnitte behindert wird. Zwischen beiden Abschnitten ist eine Feder eingesetzt, die die Abschnitte in Längsrichtung auseinanderdrückt.

Eine derartig ausgebildeter Antrieb überträgt die Einstellbewegung durch Drehung zum Regulierring, während er aufgrund seiner Längsbeweglichkeit - belastet durch die Federkraft und den Innendruck - an der Stelle seiner Durchführung zum Meßraum gegen eine Dichtung gepreßt wird. Der Antrieb kann gegen den Innendruck und die Federkraft von außen durch Antippen teleskopartig ineinandergedrückt werden, so daß die Dichtung abhebt und Luft aus dem Zähler entweichen kann.

Der Antrieb dient aufgrund dieser Ausbildung neben seiner Einstellfunktion in vorteilhafter Weise gleichzeitig der Entlüftung des Zählers, wobei die Entlüftung ohne Werkzeug mit einfachen Mitteln vorgenommen werden kann, indem z. B. der Antrieb mit Hilfe eines Kugelschreibers heruntergedrückt wird.

Es ist natürlich auch möglich, den Antrieb für die Einstellung des Regulierringes anders auszuführen. So kann z. B. an dem Außenkranz eine Mutter drehfest angeordnet sein, in die eine abgedichtet durch das Zählergehäuse geführte Schraube eingreift. Die Einstellung des Regulierringes erfolgt dann durch Ein- bzw. Ausschrauben der Schraube in die Mutter, wobei das Gewindespiel zwischen Schraube und Mutter ausreichend ist, um die für die gewünschte Strömungsbeeinflussung geringfügige Verschwenkung der Stege des Regulierringes aus dem Strömungsschatten der Nabenrippen zu erreichen. Dieser Antrieb für die Einstellung des Regulierringes ist fertigungstechnisch sehr einfach, allerdings geht hier die oben beschriebene Belüftungsfunktion des Antriebs verloren.

Nach dem Stand der Technik ist der Antrieb für das Reguliermittel meistens oben am Zähler angebaut, und zwar dort, wo der vorhandene Platz wegen der kompakten Zählerbauweise überwiegend vom Zählwerk beansprucht wird. Der Regulierantrieb ist aus diesem Grunde unter dem Zählwerk angeordnet und erst dann zugänglich, nachdem das Zählwerk abgebaut wurde.

Der Vorteil dieser Bauweise liegt darin, daß der Regulierantrieb ohne besondere Verplombung - nur durch die Zählwerksplombe - gegen unerlaubte Eingriffe geschützt ist. Nachteilig ist, daß die Zugänglichkeit erst nach dem Abbau bzw. der Abnahme des Zählwerkes gegeben ist.

In weiterer Ausgestaltung der vorliegenden Erfindung sind daher Mittel vorgesehen, die zur Betätigung des Regulierantriebs seitlich aus dem Zählwerk heraus schwenkbar sind. Das kann z. B. mittels eines schwenkbar an den Regulierantrieb angelenkten Hebels realisiert werden, der im nicht gebrauchten Zustand in einen freien Raum innerhalb des Zählwerks geklappt ist, und zur Bedienung aus dem Zählwerk herausklappbar ist. Möglich sind auch herausschwenkbare Zahnradkombinationen. Der Vorteil einer derartigen Ausführung liegt darin, daß das Zählwerk nicht wie bisher üblich, abgenommen werden muß, um den Regulierantrieb bedienen zu können. Bei dieser Bauart ist eine zusätzliche Verplombung des Regulierantriebes nicht erforderlich, sondern es kann die Verplombung des Zählwerkes genutzt werden.

Die Erfindung wird nachstehend anhand eines Ausführungsbeispieles näher erläutert. In der dazugehörigen Zeichnung zeigen:
- Fig. 1.1 - 1.3: eine schematische Darstellung verschiedener Positionen des Regulierringes und die daraus resultierende Beeinflussung der Anströmrichtung; im einzelnen zeigt dabei
Fig. 1.1 die Plusstellung des Regulierringes, in der die Drehzahl des Flügelrades erhöht wird,
Fig. 1.2 die Nullstellung des Regulierringes, in der die Drehzahl des Flügelrades unbeeinflußt bleibt,
Fig. 1.3 die Minusstellung des Regulierringes, in der die Drehzahl des Flügelrades verringert wird;
- Fig. 2: einen Längsschnitt durch einen Woltmannzähler mit einem Regulierring an der stromauf angeordneten Nabe und einem Regulierring an der stromab angeordneten Nabe,
- Fig. 3: einen Blick in Strömungssrichtung auf die stromauf liegende Nabe und ihre Halterung im rohrförmigen Element, wobei andere Teile des Zählers nicht gezeigt sind,
- Fig. 4: die Konfiguration eines an die Nabenkonstruktion nach Fig. 3 angepaßten Regulierringes,
- Fig. 5: Einzelheiten des Antriebs des Regulierringes, und
- Fig. 6: einen Blick in Strömungsrichtung auf einen in ein Zählergehäuse eingebauten Meßeinsatz mit einer erfindungsgemäßen Reguliereinrichtung.

Der in Fig. 2 gezeigte Woltmannzähler ist in üblicher Weise aufgebaut. Zwischen einer stromauf liegenden Nabe 1 und einer stromauf liegenden Nabe 2 ist ein Flügelrad 3 drehbar und axial verschiebbar gelagert. Die Naben 1, 2 sind jeweils über Rippen 4 in einem rohrförmigen, den Durchflußquerschnitt begrenzenden Element 5 mittig gehaltert, und mit diesen Teilen einstückig ausgebildet.

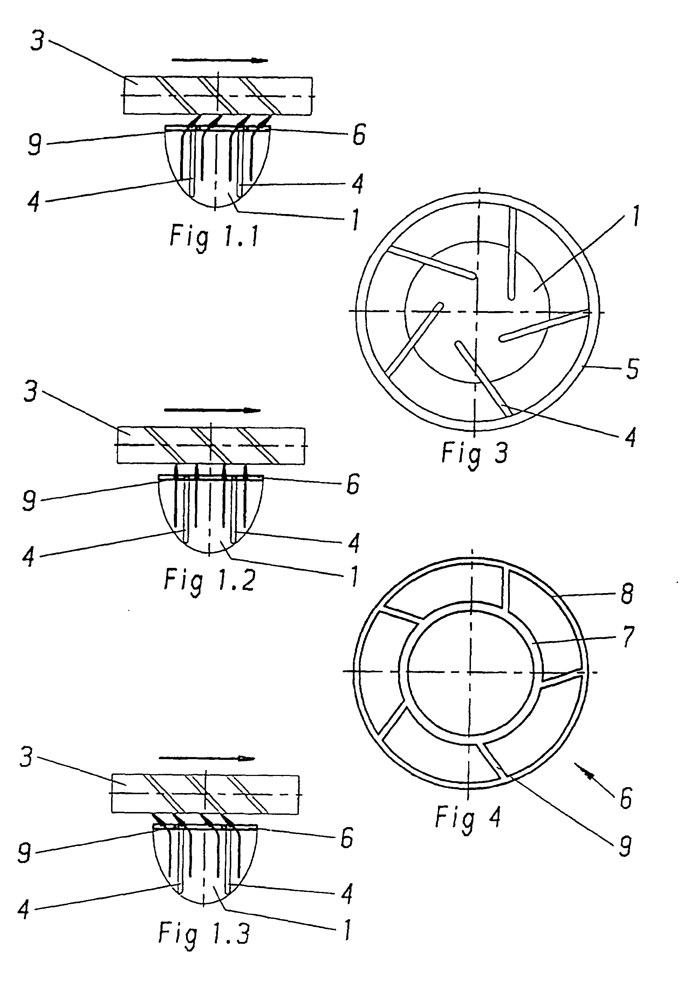

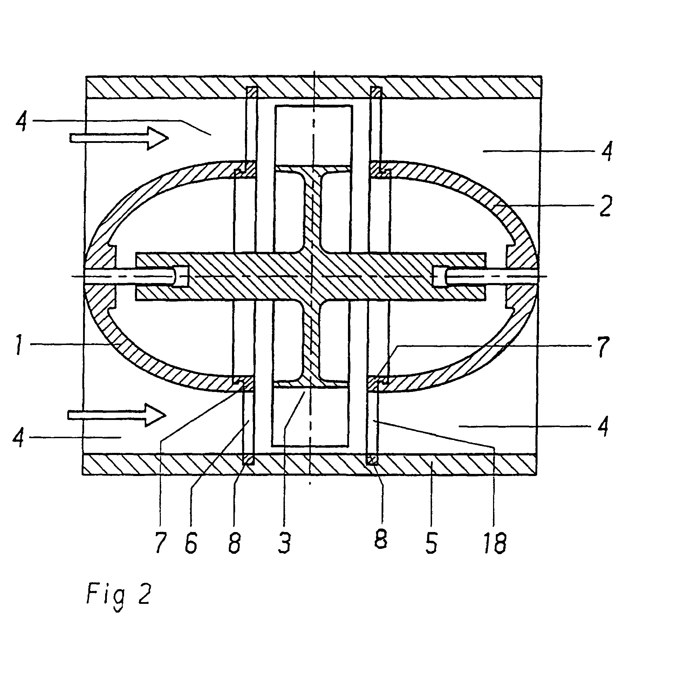

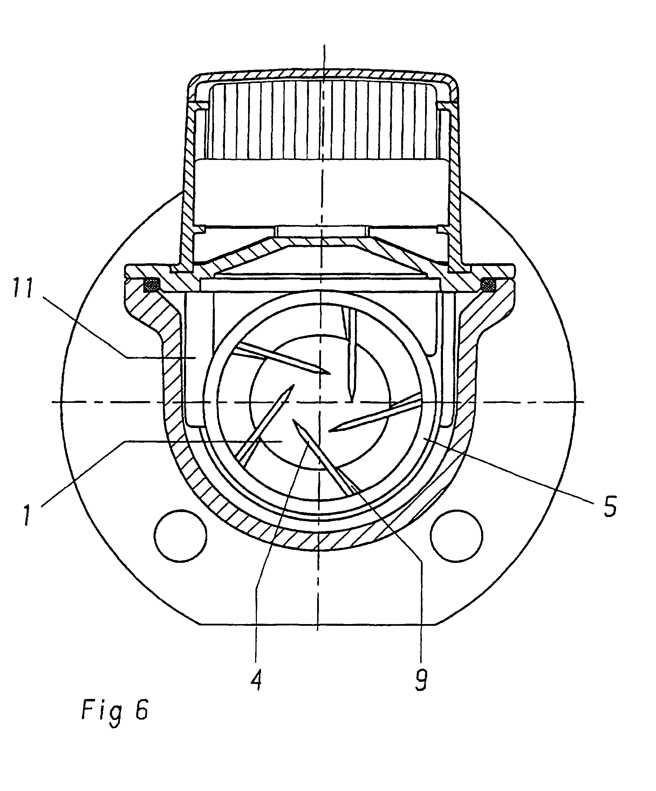

Die Anordnung bzw. Stellung der Rippen 4 geht am besten aus den Figuren 3 und 6 hervor. Daraus ist zu erkennen, daß die Rippen 4 gleichmäßig auf den Umfang des Strömungsquerschnitts angeordnet sind und jeweils unter gleichem Winkel schräg auf die Nabenoberfläche aufsetzen. Diese Schrägstellung der Rippen 4 ergibt im Zusammenwirken mit der gekrümmten Oberfläche der Nabe 1 eine Verdrallung der einströmenden Flüssigkeit. Die Rippen 4 der stromab liegenden Nabe 2 sind in analoger Weise ausgeführt.

Unmittelbar hinter der Nabe 1 ist ein Regulierring 6 angeordnet. Dieser Regulierring 6 besteht aus einem Nabenkranz 7 und einem Außenkranz 8, zwischen denen Stege 9 verlaufen. Der Nabenkranz 7 ist mittels eines Bajonettverschlusses mit der Nabe 1 verbunden. Dieser Verschluß gewährleistet den Halt des Regulierringes 6 an der Nabe 1 und gleichzeitig seine Verschwenkbarkeit um die Flügelradachse in dem für die Strömungsbeeinflussung erforderlichen geringen Maße. Der Außenkranz 8 des Regulierringes 6 liegt in einer Nut des rohrförmigen Elements 5.

Aus einer Gegenüberstellung der Figuren 3 und 4 ist ersichtlich, daß die Stege 9 des Regulierringes 6 an die Lage der Rippen 4 angepaßt sind, so daß die Stege 9 in der Nullstellung des Regulierringes 6 genau hinter den Rippen 4 liegen. Diese Nullstellung ist in Fig. 1.2 dargestellt. Die Strömung bleibt in diesem Fall unbeeinflußt, was durch die geraden Pfeile in Strömungsrichtung symbolisiert wird. Der Pfeil oberhalb des Flügelrades 3 gibt - wie auch in den Fig. 1.2 und 1.3 - die Drehrichtung des Flügelrades 3 an.

Ist es zur Kompensation eines Meßfehlers erforderlich, die Drehzahl des Flügelrades 3 zu erhöhen, wird der Regulierring 6 - in Strömungsrichtung gesehen - rechts herum um die Flügelradachse verschwenkt, so daß die Stege 9 aus dem Strömungsschatten der Rippen 4 heraustreten, wie in Fig. 1.1 dargestellt. Die Strömung erfährt dadurch eine Ablenkung nach rechts, also in die Drehrichtung des Flügelrades 3, dessen Drehzahl sich dadurch erhöht.

Wenn die Drehzahl des Flügelrades 3 reduziert werden muß, ist der Regulierring 6 links herum zu verschwenken. Diese Stellung ist in Fig. 1.3 sowie in Fig. 6 gezeigt. Die Strömung wird dann in eine Richtung entgegen dem Drehsinn des Flügelrades 3 abgelenkt, dessen Drehzahl sich infolgedessen verringert.

Der Vorteil dieser Lösung besteht darin, daß mit einer einzigen Einstellbewegung der gesamte Strömungsquerschnitt gleichmäßig erfaßt wird, und daher aus der Regulierung eines Meßfehlers keine Querkräfte auf die Flügelradlager entstehen.

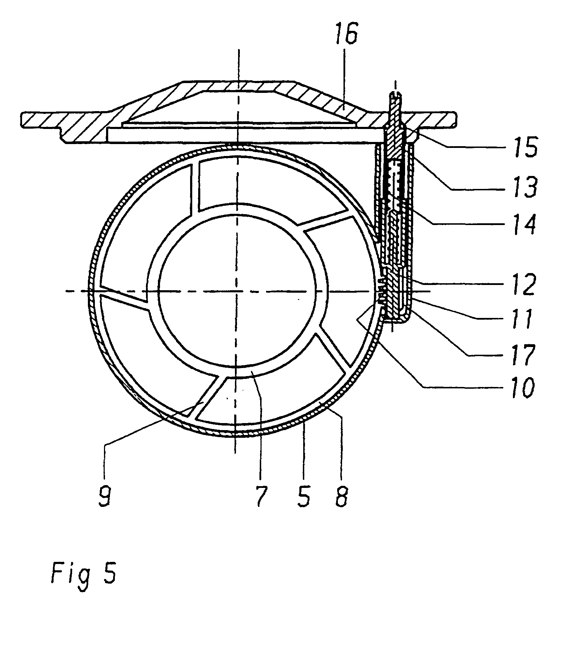

Die Übertragung der Einstellbewegung von außen auf den Regulierring 6 ist in Fig. 5 dargestellt. Es ist zu erkennen, daß ein Abschnitt des Außenkranzes 8 des Regulierringes 6 als Zahnstange 10 ausgebildet ist. Im Bereich dieses zahnstangenförmigen Abschnitts 10 weist die Wandung des rohrförmigen Elements 5 einen Durchbruch auf, an den eine Führung 11 angesetzt ist. Diese Führung 11 nimmt einen aus zwei Abschnitten 12, 13 bestehenden Antrieb für den Regulierring 6 auf. Die beiden Abschnitte 12, 13 sind teleskopartig und formschlüssig ineinandergeschoben, so daß sie in Längsrichtung relativ zueinander verschiebbar sind und eine Drehbwegung von einem Abschnitt auf den anderen Abschnitt übertragen werden kann. Zwischen den Abschnitten 12, 13 ist eine Spiralfeder 14 eingelegt, die den Abschnitt 13 gegen eine Dichtung 15 am Kopfflansch 16 preßt. Das durch den Kopfflansch 16 hin-durchgeführte Ende des Abschnitts 13 weist einen Schlitz für einen Schraubendreher auf.

Am unteren Ende des Abschnitts 12 ist eine Schnecke 17 vorgesehen, die im Eingriff mit dem zahnstangenartig ausgeführten Abschnitt 10 des Außenkranzes 8 des Regulierringes 6 steht. Durch Verdrehen des oberen Abschnitts 13 mittels eines Schraubendrehers wird die Drehung auf den unteren Abschnitt 12 und damit auf den Regulierring 6 übertragen. Gleichzeitig dient ein derart ausgebildeter Antrieb der Entlüftung des Zählers. Dazu ist der Abschnitt 13 des Antriebs nach unten zu drücken, wodurch er von der Dichtung 15 abhebt, und eine Verbindung zwischen Druckraum und Atmosphäre hergestellt ist.

Für den Fall einer Rückwärtsströmung ist auf der anderen Seite des Flügelrades 3 ein weiterer Regulierring 18 vorgesehen, wie aus Fig. 2 hervorgeht.

Dieser Regulierring 18 ist bau- und funktionsgleich mit dem stromauf liegenden Regulierring 6, so daß sich hier weitere Erläuterungen erübrigen.

## Patentansprüche

1. Woltmannzähler mit einem zwischen einer stromauf angeordneten Nabe (1) und einer stromab angeordneten Nabe (2) in einem rohrförmigen Element (5) drehbar gelagerten Flügelrad (3), wobei die Naben (1, 2) jeweils über Rippen (4) im rohrförmigen Element (5) gehaltert sind, und zumindest an der stromauf liegenden Nabe (1) Reguliermittel zur Kompensation von aus Fertigungstoleranzen resultierenden Meßfehlern vorgesehen sind, **dadurch gekennzeichnet, daß** unmittelbar hinter der stromauf angeordneten Nabe (1) ein um die Flügelradachse verschwenkbares Regulierteil (6) vorgesehen ist, welches Stege (9) besitzt, die in seiner Nullstellung im Strömungsschatten der Rippen (4) liegen und in seiner verschwenkten Stellung gleichmäßig auf den Umfang verteilt in den Strömungsquerschnitt hineinragen.

2. Woltmannzähler nach Anspruch 1, **dadurch gekennzeichnet, daß** für den Fall einer Rückwärtsströmung auch an der stromab liegenden Nabe (2) ein derartiges Regulierteil (18) vorgesehen ist.

3. Woltmannzähler nach einem der vorstehenden Ansprüche, **dadurch gekennzeichnet, daß** das Regulierteil (6, 18) als Ring ausgebildet ist, bestehend aus einem Außenkranz (8), Stegen (9) und einem Nabenkranz (7), wobei der Außenkranz (8) in der Wandung des rohrförmigen Elements (5) und der Nabenkranz (7) an der Nabe (1, 2) gehaltert sind.

4. Woltmannzähler nach Anspruch 3 mit einem Antrieb, der die von außen vorzunehmende Einstellbewegung über eine Abdichtung in den unter Druck stehenden Meßraum zum Regulierteil überträgt, **dadurch gekennzeichnet, daß** ein Außenabschnitt des Außenkranzes (8) des Regulierteils (6) als Zahnstange (10) ausgeführt ist, in die eine an dem Antrieb vorgesehene Schnecke (17) eingreift, wozu die Wandung des rohrförmigen Elements (5) an dieser Stelle durchbrochen ist.

5. Woltmannzähler nach Anspruch 4, **dadurch gekennzeichnet, daß** der Antrieb aus zwei Abschnitten (12, 13) besteht, die teleskopartig ineinanderschiebbar und gleichzeitig gegen ein Verdrehen relativ zueinander gesichert sind, wobei der eine Abschnitt (12) mit dem Regulierring (6) in Eingriff steht, der andere Abschnitt (13) über eine Abdichtung (15) nach außen geführt ist und zwischen beiden Abschnitten (12, 13) eine Feder eingesetzt ist, derart, daß der nach außen geführte Abschnitt (13) gegen die Abdichtung (15) gepreßt wird.

6. Woltmannzähler nach einem der Ansprüche 4 und 5, bei dem der Austritt des Antriebs für das Regulierteil unterhalb des Zählwerks liegt, **dadurch gekennzeichnet, daß** Mittel vorgesehen sind, die zur Betätigung des Antriebs seitlich aus dem Zählwerk heraus schwenkbar sind.

## Claims

1. Woltmann meter having an impeller (3) mounted in bearings such that it is able to rotate in a tubular element (5) between a hub (1) arranged upstream and a hub (2) arranged downstream, the hubs (1, 2) in each case being retained in the tubular element (5) by means of ribs (4), and control means for compensating for measurement errors resulting from manufacturing tolerances being provided at least on the hub (1) located upstream, **characterised in that** a control part (6) that can be swivelled about the impeller axis is provided immediately behind the hub (1) arranged upstream, which control part (6) has webs (9), which, when the control part (6) is in its zero position, are located in the flow shadow of the ribs (4) and, when the control part (6) is in its swivelled position, are uniformly distributed around the periphery and project into the flow cross-section.

2. Woltmann meter according to Claim 1, **characterised in that** a similar control part (18) is also provided on the hub (2) located downstream in case of a reverse flow.

3. Woltmann meter according to one of the preceding claims, **characterised in that** the control part (6, 18) is constructed as a ring, consisting of an outer collar (8), webs (9) and a hub collar (7), the outer collar (8) being retained in the wall of the tubular element (5) and the hub collar (7) being retained on the hub (1, 2).

4. Woltmann meter according to Claim 3, having a drive that transmits the adjustment movement to be performed from outside to the control part via a seal in the pressurised measurement chamber, **characterised in that** an outer section of the outer collar (8) of the control part (6) is constructed as a toothed rack (10) , in which a worm (17) provided on the drive engages, for which purpose the wall of the tubular element (5) is interrupted at this location.

5. Woltmann meter according to Claim 4, **characterised in that** the drive consists of two sections (12, 13) which can be slid into one another in a telescopic manner and, at the same time, are secured to prevent turning relative to one another, the one section (12) being in engagement with the control ring (6), the other section (13) being fed to the outside via a seal (15) and a spring being inserted between the two sections (12, 13), in such a way that the section (13) fed to the outside is pressed against the seal (15).

6. Woltmann meter according to one of Claims 4 and 5 in which the outlet of the drive for the control part is located underneath the counter, **characterised in that** means are provided that can be pivoted laterally out of the counter in order to actuate the drive.

## Revendications

1. Moulinet de Woltmann avec une roue hélice logée rotative dans un élément tubulaire entre un moyeu (1) disposé en amont et un moyeu (2) disposé en aval, les moyeux (1, 2) étant respectivement maintenus dans l'élément tubulaire (5) au moyen de nervures (4) et des moyens régulateurs sont prévus au moins sur le moyeu (1), situé en amont, pour la compensation d'erreurs de mesure résultant de tolérances de fabrication, **caractérisé en ce qu'**immédiatement derrière le moyeu (1) disposé en amont, est prévue une pièce régulatrice (6) pouvant pivoter autour de l'axe de la roue hélice, qui possède des ailettes (9) se trouvant, en position zéro de la pièce régulatrice, sur le côté, où elles sont abritées de l'écoulement par les nervures (4) et, qui font saillie, réparties uniformément sur la circonférence, dans la section transversale d'écoulement, en position pivotée de la pièce régulatrice.

2. Moulinet de Woltmann suivant la revendication 1, **caractérisé en ce que** pour le cas d'un écoulement inverse, une pièce régulatrice (18) de ce genre est également prévue sur le moyeu (2) situé en aval.

3. Moulinet de Woltmann suivant une des revendications précédentes, **caractérisé en ce que** la pièce régulatrice (6, 18) est conçue comme bague constituée d'une couronne extérieure (8), d'ailettes (9) et d'une jante de roues à aubes (7), la couronne extérieure (8) étant maintenue dans la paroi de l'élément tubulaire (5) et la jante de roues à aubes (7), sur le moyeu (1, 2).

4. Moulinet de Woltmann suivant la revendication 3 avec un entraînement, qui transmet le mouvement de réglage à effectuer depuis l'extérieur, par l'intermédiaire d'une garniture d'étanchéité, à la pièce régulatrice dans la chambre de mesure sous pression, **caractérisé en ce qu'**une section extérieure de la couronne extérieure (8) de la pièce régulatrice (6) est conçue comme crémaillère (10), dans laquelle s'engrène une vis sans fin (17) prévue sur l'entraînement, endroit, sur lequel la paroi de l'élément tubulaire (5) est interrompue à cet effet.

5. Moulinet de Woltmann suivant la revendication 4, **caractérisé en ce que** l'entraînement est constitué de deux sections (12, 13), qui peuvent coulisser l'une dans l'autre à la manière d'un télescope et qui sont en même temps protégées contre la torsion l'une par rapport à l'autre, une des sections (12) étant en engrenage avec la bague de régulation (6), l'autre section (13) étant dirigée vers l'extérieur, par l'intermédiaire d'une garniture d'étanchéité (15), et **en ce qu'**un ressort est inséré entre les deux sections (12,13) de manière que la section dirigée vers l'extérieur (13) soit pressée contre la garniture d'étanchéité (15).

6. Moulinet de Woltmann suivant une des revendications 4 et 5, dont la sortie de l'entraînement pour la pièce régulatrice est disposée au-dessous du totalisateur, **caractérisé en ce que** des moyens pouvant être pivotés latéralement hors du totalisateur sont prévus pour actionner l'entraînement.
